# EUROPÄISCHE PATENTANMELDUNG

(11) **EP 1 454 527 A1**
(43) Veröffentlichungstag der Anmeldung: **08.09.2004**
(21) Anmeldenummer: 04004909.0
(22) Anmeldetag: 03.03.2004
(51) Int. Cl.: A01N 25/04, A01N 25/02, A01N 37/34, C02F 1/50

(54) **Mikrobiozid zur Desinfektion von industriellen Wasserkreisläufen**

(30) Priorität: 05.03.2003 DE 10309425
(71) Anmelder: BK Giulini GmbH, 67065 Ludwigshafen (DE)
(72) Erfinder: Ulubay, Hasan, Dr., 67125 Schauernheim (DE); Lunkenheimer, Rudolf, Dr., 55263 Wackernheim (DE); Höötmann, Ute, Dr., 68526 Ladenburg (DE); Imhof, Joachim, 67065 Ludwigshafen (DE); Weih, Heinz-Willi, 67061 Ludwigshafen (DE)

(57) **Zusammenfassung**

Die Erfindung betrifft die Verwendung eines Mikrobiozids zur Entkeimung industrieller wasserführender Systeme.

Das Mikrobiozidsystem ist dadurch gekennzeichnet, dass es aus einer Mischung, enthaltend
a. Wasser und/oder
b. mindestens einen Lösungsvermittler und/oder
c. mindestens einem bioziden Wirkstoff und
d. mindestens ein Tensid oder Mischungen von Tensiden und
e. mindestens einen Kohlenwasserstoff oder Mischungen von Kohlenwasserstoffen, besteht, wobei die Mischung als solche oder in Kombination mit mindestens einem Oxidationsmittel verwendet wird.

## Beschreibung

Die Erfindung betrifft die Verwendung eines Mikrobiozids zur Entkeimung industrieller wasserführender Systeme.
Das Wachstum von Mikroorganismen im wässrigen Milieu ist ein natürlicher Vorgang, der in industriellen Systemen weitreichende Folgen haben kann. So gehören die Behinderung des Wärmeübergangs bei Wärmetauschern, die Verminderung der Kühlleistung in Kühltürmen, das Verstopfen von Filtern, Produktionsstörungen in der Papierproduktion u.v.a.m. zu den Folgen unerwünschten biologischen Wachstums.
Zahlreiche Vorschläge zur Lösung dieser Probleme wurden gemacht. Stand der Technik z.B. in der Papierproduktion ist der Einsatz von Mikrobiziden wie bestimmten Bromverbindungen, Isothiazolonen, Dithiocarbamaten, Thiocyanaten, quatemären Ammoniumverbindungen u.a. (Weigl J, Grenz R, Baumgarten HL, "Grundlagen der Chemie für Papieringenieure" PTS Verlag München 1992 5.2-5.45). Nachteil dieser Substanzen ist eine vergleichsweise hohe Einsatzmenge, die unter Berücksichtigung ökonomischer Aspekte lediglich Dosiermengen erlaubt, die die Mikrobiologie hemmen, jedoch nicht weitgehend abtöten. Zudem sind diese Substanzen in der Regel mit einem relativ hohen Gefahrenpotential behaftet, so dass auch aus diesem Grunde ihr Einsatz beschränkt werden sollte.

Ein weiterer Weg zur antimikrobiellen Behandlung von industriellen Wassersystemen ist der Einsatz von Oxidationsmitteln, der sehr verbreitet ist. In Wassersystemen mit einer hohen organischen Fracht kann jedoch die Dosierung oxidierender Biozide durch die "Chlorzehrung" ineffektiv werden (Standard methods for the examination of water and waste water, 16^{th} edition, methods § 409, p 316-319). Durch Zusatz von Ammonium oder Aminoderivaten zu solchen belasteten Wässern wird die Bildung von Chloraminen erreicht, die keiner so starken "Chlorzehrung" unterworfen sind (Atasi Khalil z. et al., Proc. Annu. Conf. Am. Water Works Assoc., 1988 (Pt 2), pp 1763-1770).
In hoch organisch belasteten Systemen relativ stabile und sehr gut wirksame oxidierende Biozide können durch die in-situ Herstellung aus Ammoniumsalzen und Oxidationsmitteln hergestellt werden (EP 0517102A1). Die Herstellung ist jedoch nur unter hohem technischen, finanziellen und personellen Aufwand gewährleistet und daher schlecht praktikabel.

Zur Lösung solcher mikrobiell verursachter Probleme wurden auch Öl-in-Wasser Emulsionen als nicht mikrobiozide Systeme vorgeschlagen (EP0731776B1). Die Praxiserfahrung zeigt jedoch, dass in der überwiegenden Zahl der Fälle diese Produkte bedingt tauglich sind.

Aufgabe der Erfindung war es daher, zur Desinfektion hoch organisch und mikrobiell belasteter industrieller Wasserkreisläufe ein Mikrobiozidsystem zu entwickeln, das gegenüber den bekannten Bioziden eine verminderte Toxizität aufweist, leicht und zuverlässig handhabbar ist und das mikrobielle Wachstum mitsamt seinen unerwünschten Folgen durch ökonomisch sinnvolle Einsatzmengen sicher verhindert.

Die Aufgabe wurde erfindungsgemäß gelöst durch die Verwendung eines Mikrobizids, dadurch gekennzeichnet, dass es aus einer Mischung, enthaltend
a. Wasser und/oder
b. mindestens einen Lösungsvermittler und/oder
c. mindestens einen bioziden Wirkstoff und
d. mindestens ein Tensid oder Mischungen von Tensiden und
e. mindestens einen Kohlenwasserstoff oder Mischungen von Kohlenwasserstoffen, besteht, wobei die Mischung als solche oder in Kombination mit mindestens einem Oxidationsmittel verwendet wird.

Unter Lösungsvermittler sind solche Stoffe zu verstehen, die durch ihre Gegenwart andere, in einem bestimmten Lösungsmittel praktisch unlösliche Verbindungen in diesem Lösungsmittel löslich oder emulgierbar machen. Der Lösungsvermittler oder ein Gemisch von Lösungsvermittlern kann optional eingesetzt werden, wobei bevorzugt Isopropanol und/oder Ethylenglykolmonobutylether und/oder Dipropylenglykolmonomethylether verwendet werden. Das mengenmäßige Verhältnis Lösungsvermittler/Kohlenwasserstoff liegt hierbei zwischen 0 und 5, bevorzugt zwischen 0 und 2.
Als Tenside werden bevorzugt nichtionische und/oder anionische und/oder kationische Typen, besonders bevorzugt Kombinationen aus nichtionischen mit anionischen oder nichtionischen mit kationischen Tensiden verwendet, wobei das mengenmäßige Verhältnis Tensid/Kohlenwasserstoff zwischen 0,1 und 5, bevorzugt zwischen 0,2 und 2 liegt. Im allgemeinen werden unter anionischen Tensiden die Salze grenzflächenaktiver Säuren verstanden. Es ist aber auch möglich, dass ein gewisser Anteil des anionischen Tensids als freie Säure vorliegen kann. Im Fall eines Salzes werden als Kationen bevorzugt Na⁺ und/oder K⁺ und/oder NH₄⁺ verwendet.
Als Gegenanionen der kationischen Tenside werden bevorzugt Cl⁻ und/oder Br⁻ verwendet. Liegen in der Dispersion oder Lösung anionische und kationische Tenside gleichzeitig vor, sind solche Tenside bevorzugt, die nicht über eine Salzbildung zum Ausfällen neigen und eine einfache Handhabung gewährleisten.
Beim Vorliegen eines kationischen Tensids kann dieses auch den bioziden Wirkstoff darstellen.
Als Kohlenwasserstoffe werden bevorzugt Isoparaffine oder Mischungen von Isoparaffinen mit Siedepukten bis zu 320°C oder Paraffine oder Terpene verwendet.
Als bioziden Wirkstoff (Komponente c.) enthält das Mikrobiozid bevorzugt Isothiazolidinon-Derivate, 2-Brom-2-nitropropan-1,3-diol , quaternäre Ammonium Verbindungen und 2,2-Dibrom-3-nitrilopropionamid (DBNPA), wobei DBNPA besonders bevorzugt ist.
Der Gehalt an biozidem Wirkstoff (Komponente c.) kann bis zu 20 Gew.-% betragen.

Es war überraschend festzustellen, dass die kombinierte Anwendung der beschriebenen Bestandteile in ihrer Wirksamkeit weit über die addierten Effekte der Einzelkomponenten hinausgeht.

So konnte der Gehalt an biozider Wirksubstanz (DBNPA) in der Formulierung bei gleichem Effekt auf 50% bis 27% gegenüber handelsüblichen Formulierungen gesenkt werden. Das Zusammenwirken der verschiedenen Wirkstoffe und der damit verbundene Synergismus ist noch nicht geklärt. Es ist zu vermuten, dass dies auf die Kohlenwasserstoff/Tensid Mischung zurückzuführen ist, durch die die Bioverfügbarkeit für die Aktivsubstanzen durch Desintegrationsvorgänge der mikrobiellen Zellmembranen derart erhöht wurde, dass eine bessere Wirksamkeit bei geringerer Einsatzmenge erreicht werden konnte.

Technisch sinnvoll ist es, die Mischungen, bestehend aus den Komponenten a. bis e., in konzentrierter Form anzubieten, weshalb der Wassergehalt dieser Mischungen bevorzugt bei 0 bis 50 Gew.-% und besonders bevorzugt bei 0 bis 25 Gew.% liegt.
Die Mischungen finden hauptsächlich Verwendung in wasserführenden Systemen wie z.B. in der Papierindustrie, in der chemischen Industrie oder in Kraftwerken zur Kontrolle der Mikrobiologie, wobei sie diesen Systemen über eine kontinuierliche oder semikontinuierliche Dosierung zugeführt werden.

Abhängig von der Konzentration der Mischungen und des Einsatzbereiches liegen im Fall der Mischung die Einsatzkonzentrationen bei 0,1 bis 300ppm, bevorzugt bei 0,3 bis 150ppm. Im Falle verdünnter Formulierungen können diese Konzentrationen selbstverständlich überschritten werden.
Werden die Mischungen, bestehend aus den Komponenten a. bis e., in Kombination mit Oxidationsmitteln angewendet, so können beide Komponenten separat, parallel oder vorgemischt über eine kontinuierliche oder semikontinuierliche Dosierung einer Flüssigkeit wie z.B. wasserführenden Systemen, zugeführt werden. Für die Konzentration der Mischungen gilt das oben gesagte, die Konzentration des Oxidationsmittels liegt bei 0,02 bis 50ppm als Cl₂, bevorzugt bei 0,03 bis 25 ppm als Cl₂.

Die nachfolgenden Beispiele sollen die Erfindung näher erläutern, ohne diese einzuschränken.

**System A:** Mischung, enthaltend 11,2 Gew.-% Wasser, 42,1 Gew.-% Tensidmischung (nichtionisch/anionisch), 36,7 Gew.% Isoparaffin, 10 Gew.% DBNPA

### Beispiel 1

In ersten Tests wurde das Mikrobiozid, (System A) mit einer handelsüblichen DBNPA-Lösung mit doppelter Konzentration an Aktivsubstanz verglichen. Für diesen Vergleich wurde die Methode "Bestimmung der minimalen Hemmkonzentration" herangezogen (Salzburger, W; Greitner, D; Hoffmann, C; Claus, G; Biochemischer Schnelltest zur Wertbestimmung von Schleimbekämpfungsmitteln, Wochenblatt für Papierfabrikation, 118, 1990, Nr.11/12, S. 516-519). Die Tests wurden an verschiedenen Produktionswässern altpapierverarbeitender Produktionsanlagen durchgeführt.

**Tabelle 1**

| Probe | MHK***** Handelsübliches Mikrobiozid (20% DBNPA) | MHK***** System A (10% DBNPA) |
|---|---|---|
| Siebwasserprobe H | 31,2 (ppm als DBNPA) | 7,8 (ppm als DBNPA) |
| Siebwasserprobe S | 31,2 (ppm als DBNPA) | 3,9 (ppm als DBNPA) |
| MHK = Minimale Hemmkonzentration in ppm bezogen auf biozide Aktivsubstanz | | |

Die Tests zeigen, dass durch die Formulierung eine Reduktion der zur vollständigen Hemmung notwendigen Konzentration an aktiver Biozidsubstanz wm bis zu 87,5 % möglich ist.

### Beispiel 2

An einer standardisierten bakteriellen Kultur wurden vergleichende Tests mit dem beschriebenen Biozidsystem durchgeführt. Eingesetzt wurde hierzu eine Reinkultur von *Pseudomonas putida* ATCC 12633, angezüchtet in Caseinpepton-Sojamehlpepton Boullion (Merck 105459) und eingestellt auf einen Titer von ca. 1x10⁹ CfU/ml. Die Bestimmung der Keimzahlen erfolgte in Anlehnung an DIN 54379.

**Tabelle 2**

| Produkt | Einsatzmenge (ppm) | Keimzahl (CfU/ml) |
|---|---|---|
| Kontrolle | - | 1×10⁹ |
| NH4Br/NaOCl (EP 0517102A1) | 2 (als Cl₂) | 2,1 × 10⁵ |
| 2,2-Dibrom-3-nitrilopropionamid | 2 (als DBNPA) | 1×10⁶ |
| NaOCl | 2(als Cl₂) | 3,2×10⁶ |
| System A | 2 (als DBNPA) | 8,0×10⁴ |
| System A+NaOCl | 1 (als DBNPA) /1 (als Cl₂ ) | 7,5×10⁴ |

Wie der Tabelle 2 zu entnehmen ist, zeichnet sich das erfindungsgemäß eingesetzte Mikrobiozidsystem gegenüber den Vergleichssubstanzen durch eine bessere Wirksamkeit bei vergleichbarer Einsatzmenge aus.

### Beispiel 3

Zu den unerwünschten Folgen mikrobiellen Wachstums gehört die Bildung von Ablagerungen auf Oberflächen. Diese können im Laborversuch simuliert werden. Hierzu 'werden unter definierten Bedingungen Birnholzbrettchen in Wasserproben eingebracht (in diesem Fall ein Siebwasser einer zellstoffverarbeitenden Papierfabrik) und die Bildung von Belägen nach 24 Stunden optisch beurteilt. Die Versuchsnummer 010-206-01 bezeichnet System A. Zum Vergleich wurde eine 0-Kontrolle mitgeführt sowie eine Öl-in-Wasser Emulsion gemäß EP0731776B1 bezeichnet mit "60%O". In allen Fällen betrug die Einsatzkonzentration 200 ppm bezogen auf Handelsware.
Deutlich erkennbar zeigt der Ansatz, versetzt mit dem erfindungsgemäß formulierten System A die geringste Ablagerungsneigung (siehe Abbildung 1 im Anhang).

### Beispiel 4

An einer Papiermaschine im Technikumsmaßstab wurden erfindungsgemäß formulierte Mikrobiozidsysteme im Vergleich zu konventionellen Bioziden getestet. Verwendet wurde ein Stoffgemisch aus Zeitungsdruck, Illustrierter und Karton im Verhältnis 1:1:1.

**Tabelle 3**

| Produkt | Einsatzmenge in ppm | Keimzahl (CfU/ml) |
|---|---|---|
| 0-Kontrolle | - | 3,9x10⁷ |
| 20%ige DBNPA Formulierung (handelsüblich) | 25 ppm | 2,9x10⁴ |
| System A | 25 ppm | 7,5x10³ |
| System A + NaOCl | 25 ppm System A, 5 ppm NaOCl (als Cl₂) | 2,8x10³ |

Die Tabelle 3 zeigt die antimikrobielle Wirksamkeit der erfindungsgemäß formulierten Biozidsysteme.

### Beispiel 5

An einer Papiermaschine im Technikumsmaßstab wurden systematische Versuche durchgeführt, die das antimikrobielle Verhalten verschiedener Formulierungen als Funktion der Dosierzeit zeigen. Hierbei wurde das Mikrobiozidsystem in seiner jeweiligen Formulierung zum Pulper dosiert, während das Oxidationsmittel jeweils dem Siebwasser zugegeben wurde.
Die Versuche belegen auch hier mit Keimzahlreduktionen von bis zu 5 Zehnerpotenzen die hervorragende antimikrobielle Wirksamkeit aller patentgemäß formulierten Systeme (siehe Abbildung 2 im Anhang)

### Beispiel 6

An Praxisproben aus verschiedenen Papierfabriken wurde die antimikrobielle Wirksamkeit bei geringer Einsatzmenge von System A + NaOCl systematisch überprüft

**Tabelle 4**

| Papiersorte | Probe | 0-Kontrolle | Einsatzmenge System A + NaOCl | Keimzahl nach Biozidbehandlung |
|---|---|---|---|---|
| Liner | Siebwasser I Decke | 2,6x10⁸ | 100 g/t* System A + 2ppm Überschuß NaOCl** | 4,0x10⁴ |
| Liner | Siebwasser I Einlage | I 2,0x10⁸ | 100 g/t* System A + 2ppm Überschuß NaOCl** | 9,8x10⁴ |
| Liner | Siebwasser I Unterseite | 3,0x10⁸ | 100 g/t* System A + 2ppm Überschuß NaOCl** | 8,8x10⁴ |
| Liner | Klarfiltrat | 2,8x10⁸ | 100 g/t* System A + 2ppm Überschuß NaOCl** | 2,3x10⁴ |
| Graphische Papiere | Siebwasser I PM 1 | 1,6x10⁷ | 100 g/t* System A + 2ppm Überschuß NaOCl** | <10³ |
| Graphische Papiere | Siebwasser I PM 2 | 2,3x10⁶ | 100 g/t* System A + 2ppm Überschuß NaOCl** | <10³ |
| Graphische Papiere | Dickstoff | 1,2x10⁷ | 1.00 g/t* System A + 2ppm Überschuß NaOCl** | 7,0x10⁴ |
| Feinpapiere | Siebwasser 1 | 2,9x10⁷ | 100 g/t* System A + 2ppm Überschuß NaOCl** | <10³ |
| Tissue | Frischwasser | 1,6x10⁴ | 100 g/m³ System A + 1ppm Überschuß NaOCl** | <10² |

| | | | | |
|---|---|---|---|---|
| • *t = Tonne produzierten Papiers | | | | |
| • ** = als Cl₂ | | | | |

Auch unter Einsatz geringer Mikrobiozidmengen ist eine deutliche antimikrobielle Wirksamkeit nachweisbar.

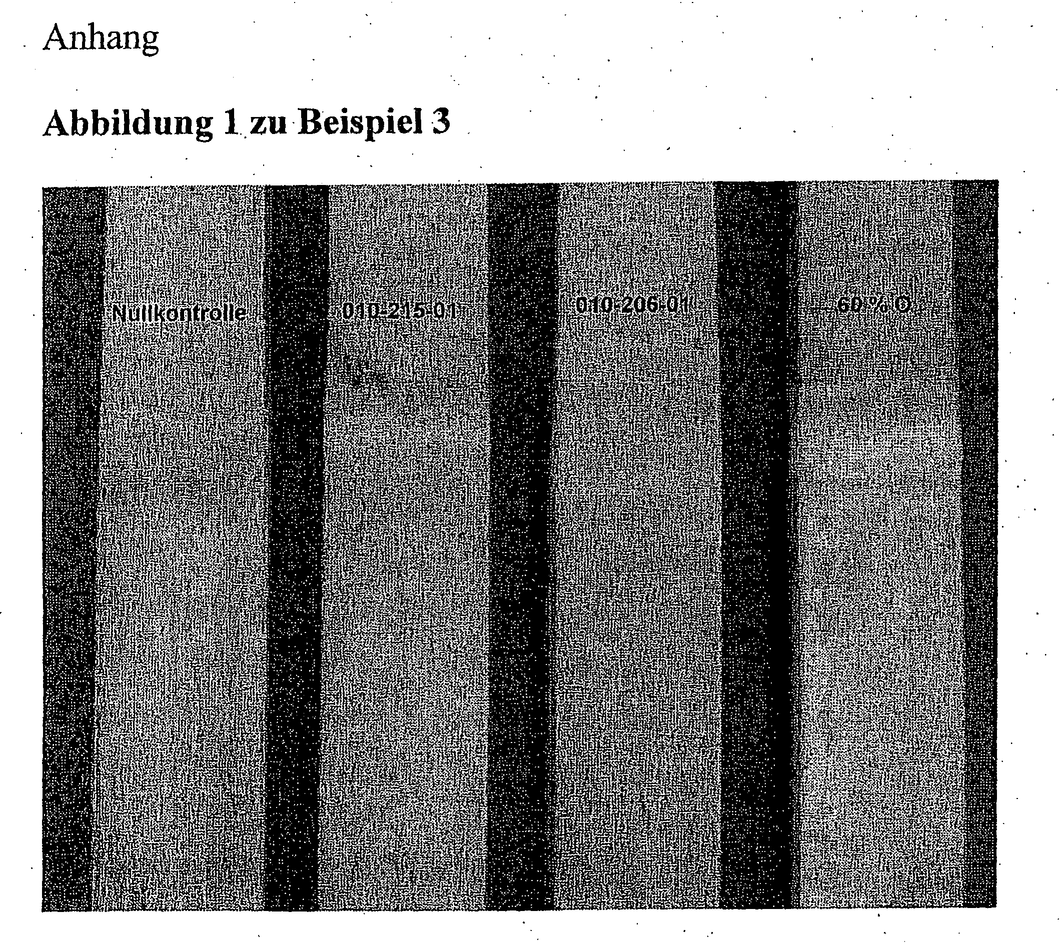

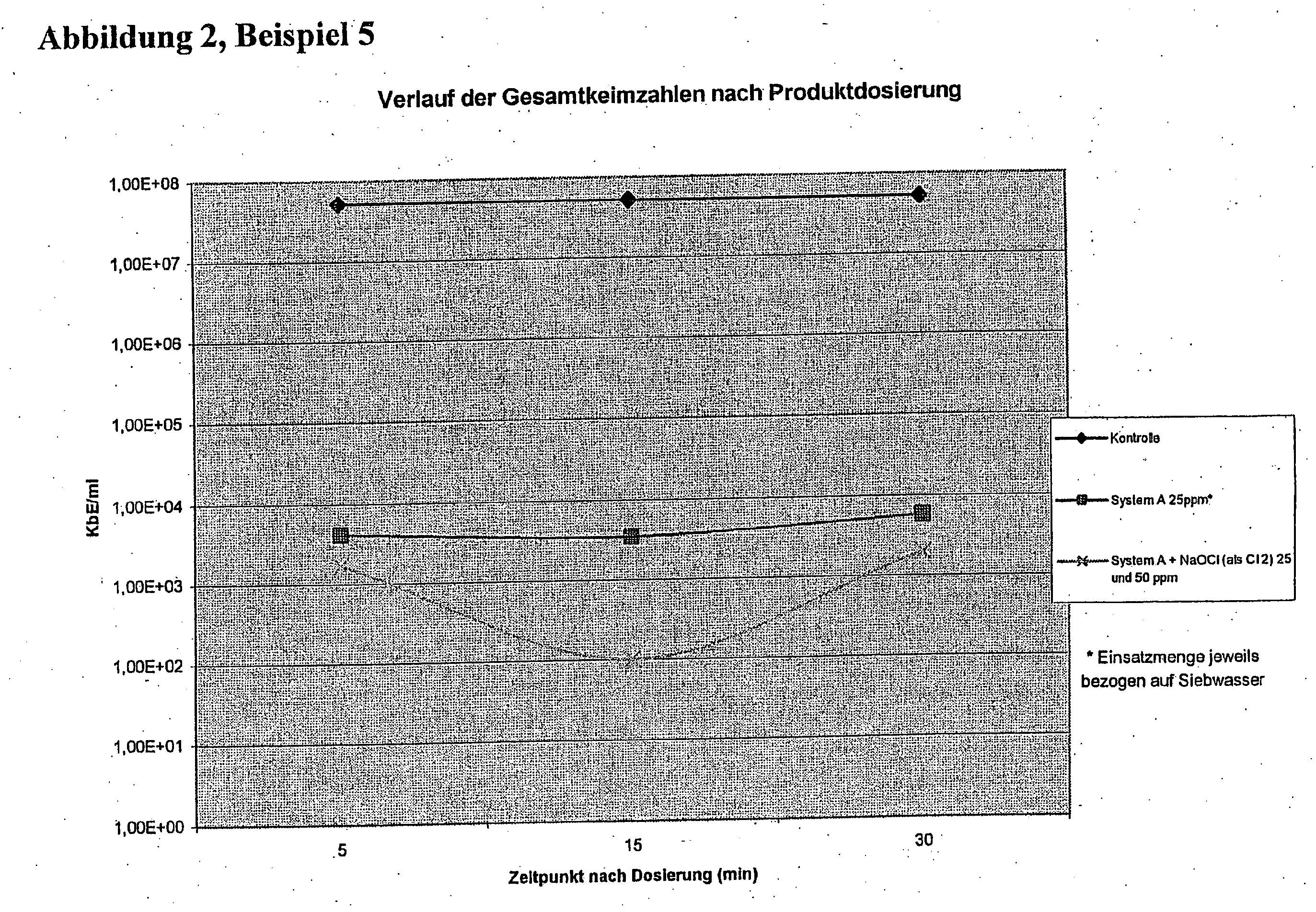

## Patentansprüche

1. Verwendung eines Mikrobiozids, **dadurch gekennzeichnet, dass** es aus einer Mischung, enthaltend
a. Wasser und/oder
b. mindestens einen Lösungsvermittler und/oder
c. mindestens einen bioziden Wirkstoff und
d. mindestens ein Tensid oder Mischungen von Tensiden und
e. mindestens einen Kohlenwasserstoff oder Mischungen von Kohlenwasserstoffen, besteht, wobei die Mischung als solche oder in Kombination mit mindestens einem Oxidationsmittel verwendet wird.

2. Verwendung eines Mikrobiozids gemäß Anspruch 1, **dadurch gekennzeichnet, dass** als Lösungsvermittler Isopropanol und/oder Ethylenglykolmonobutylether und/oder Dipropylenglykolmonomethylether verwendet werden.

3. Verwendung eines Mikrobiozids gemäß Anspruch 1, **dadurch gekennzeichnet, dass** als Tensid mindestens ein nichtionisches und/oder mindestens ein anionisches und/oder mindestens ein kationisches Tensid oder Mischungen davon, bevorzugt Kombinationen aus nichtionischen mit anionischen oder nichtionischen mit kationischen Tensiden verwendet werden.

4. Verwendung eines Mikrobiozids gemäß Anspruch 1, **dadurch gekennzeichnet, dass** als Kohlenwasserstoff Isoparaffin oder Mischungen von Isoparaffinen mit Siedepunkten bis 320°C und/oder Paraffine und/oder Terpene verwendet werden.

5. Verwendung eines Mikrobiozids gemäß Anspruch 1, **dadurch gekennzeichnet, dass** als Komponente c. Ispthiazolidinon-Derivate, 2-Brom-2-nitropropan-1,3 -diol, quaternäre Ammoniumverbindungen oder 2,2-Dibrom-3-nitrilopropionamid verwendet werden.

6. Verwendung eines Mikrobiozids gemäß Anspruch 1, **dadurch gekennzeichnet, dass** das Oxidationsmittel Hypochlorige Säure und/oder Hypobromige Säure oder deren Salze ist.

7. Verwendung eines Mikrobiozids gemäß den Ansprüchen 1 bis 6, **dadurch gekennzeichnet, dass** das mengenmäßige Verhältnis Lösungsvermittler/Kohlenwasserstoff zwischen 0 und 5, bevorzugt zwischen 0 und 2 liegt und der Wassergehalt der Mischung zwischen 0 und 50 Gew.-%, bevorzugt zwischen 0 und 25 Gew.-% liegt.

8. Verwendung eines Mikrobiozids gemäß den Ansprüchen 1 bis 7, **dadurch gekennzeichnet, dass** das mengenmäßige Verhältnis Tensid/Kohlenwasserstoff zwischen 0,1 und 5, bevorzugt zwischen 0,2 und 2 liegt und der Wassergehalt der Mischung zwischen 0 und 50 Gew.-%, bevorzugt zwischen 0 und 25 Gew.-% liegt.

9. Verwendung eines Mikrobiozids gemäß den Ansprüchen 1 bis 8, **dadurch gekennzeichnet, dass** die Mischung als Komponente c. 2,2-Dibrom-3-nitrilopropionamid in Konzentrationen bis 20 Gew.-% enthält.

10. Verfahren zur bioziden Behandlung von Flüssigkeiten gemäß mindestens einem der Ansprüche 1 bis 9, **dadurch gekennzeichnet, dass** die Mischung einer Flüssigkeit zugeführt wird.

11. Verfahren zur bioziden Behandlung von Flüssigkeiten gemäß mindestens einem der Ansprüche 1 bis 10, **dadurch gekennzeichnet, dass** die Mischung einer Flüssigkeit in einer Menge von 0,1 bis 300 ppm bevorzugt von 0,3 bis 150 ppm zugeführt wird.

12. Verfahren zur bioziden Behandlung von Flüssigkeiten gemäß mindestens einem der Ansprüche 1 bis 9, **dadurch gekennzeichnet, dass** die Mischung und das Oxidationsmittel separat, parallel oder vorgemischt einer Flüssigkeit zugeführt werden.

13. Verfahren zur bioziden Behandlung von Flüssigkeiten gemäß mindestens einem der Ansprüche 1 bis 9 und 12, **dadurch gekennzeichnet, dass** die Mischung in einer Menge von 0,1 bis 300 ppm, bevorzugt von 0,3 bis 150 ppm und das Oxidationsmittel in einer Menge von 0,02 bis 50 ppm, bevorzugt von 0,03 bis 25 ppm als Cl₂ einer Flüssigkeit zugeführt werden.

14. Verwendung der Mikrobiozide gemäß mindestens einem der Ansprüche 1 bis 13 in Wasser führenden Systemen.

15. Verwendung der Mikrobiozide gemäß mindestens einem der Ansprüche 1 bis 14 in der Papierindustrie.
